(19) Europäisches Patentamt
European Patent Office
Office européen des brevets

(11) Numéro de publication: **0 296 028**
**A2**

(12) # DEMANDE DE BREVET EUROPEEN

(21) Numéro de dépôt: **88401401.0**

(22) Date de dépôt: **09.06.88**

(51) Int. Cl.[4]: **C 08 G 77/60**
C 04 B 35/00

(30) Priorité: **10.06.87 FR 8708091**

(43) Date de publication de la demande:
**21.12.88 Bulletin 88/51**

(84) Etats contractants désignés:
**AT BE CH DE ES FR GB GR IT LI LU NL SE**

(71) Demandeur: **SOCIETE EUROPEENNE DE PROPULSION (S.E.P.) S.A.**
**24, rue Salomon de Rothschild**
**F-92150 Suresnes (FR)**

(72) Inventeur: **Bacque Eric**
**Résidence le Quadrige 90 Rue Robespierre**
**F-33400 Talence (FR)**

**Pillot, Jean-Paul**
**6 Allée de la Sanguine**
**F-33610 Cestas (FR)**

**Dunogues, Jacques**
**22 Avenue du Président Poincaré**
**F-33400 Talence (FR)**

**Olry, Pierre**
**27 Rue Edmond Costedoat**
**F-33000 Bordeaux (FR)**

(74) Mandataire: **Combe, André et al**
**CABINET BEAU DE LOMENIE 55, rue d'Amsterdam**
**F-75008 Paris (FR)**

Revendications pour l'Etat contractant suivant: ES.

(54) **Copolymères à liaisons Si-N et Si-Si, polycarbosilazanes obtenus par pyrolyse desdits copolymères et utilisation desdits polycarbosilazanes pour la préparation de carbonitrure de silicium.**

(57) La présente invention concerne les copolymères à liaisons -Si-N et -Si-Si-, caractérisés en ce qu'ils sont obtenus par polycondensation,
- d'au moins un silane de formule R $R_1$ Si $Cl_2$
- et d'au moins un disilazane de formule

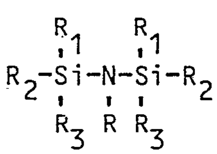

formules dans lesquelles
- $R_2$ est un atome d'halogène de préférence Br et Cl
- R, $R_1$ et $R_3$ identiques ou différents représentent un atome d'hydrogène, ou un radical hydrocarboné alkyle, alcényle, alcynyle, cycloalkyle, cycloalcényle, aryle, alkylaryle, alcénylaryle, éventuellement fonctionnel,
- un procédé de préparation desdits copolymères,
- les polycarbosilazanes obtenus par thermolyse desdits copolymères et les carbonitrures de silicium obtenus par chauffage desdits polycarbosilazanes.

EP 0 296 028 A2

**Description**

**Copolymères à liaisons Si-N et Si-Si, polycarbosilazanes obtenus par pyrolyse desdits copolymères et utilisation desdits polycarbosilazanes pour la préparation de carbonitrure de silicium.**

La présente invention concerne les copolymères à liaisons -Si-N- et -Si-Si- obtenus par polycondensation
- d'au moins un silane de formule R $R_1$ Si $Cl_2$ (A)
- et d'au moins un disilazane de formule

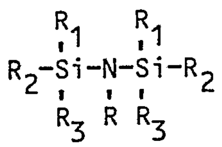 (B)

formules dans lesquelles :
- $R_2$ est un atome d'halogène de préférence Br et Cl
- R, $R_1$, $R_3$ identiques ou différents représentent un atome d'hydrogène, ou un radical hydrocarboné alkyle, alcényle, alcynyle, cycloalkyle, cycloalcényle, aryle, alkylaryle, alcénylaryle, éventuellement fonctionnel.

Les proportions de A et de B, dans le copolymère, peuvent être quelconques.

Les copolymères selon l'invention sont caractérisés en ce qu'ils comportent, dans leur chaîne principale, des séquences ⋮Si-Si-N⋮ provenant du monomère (B), des séquences ⋮ Si-Si ⋮$_n$ avec n $\geqq$ 1 provenant du monomère (A) et des séquences ⋮Si-(Si)$_n$-Si-N⋮ avec n $\geqq$ 1 provenant de l'enchaînement des deux monomères.

On notera que, lorsqu'au moins l'un des radicaux R, $R_1$, $R_3$ est de l'hydrogène, le copolymère obtenu comporte une liaison Si-H, ce qui permet, ultérieurement des réactions de réticulation chimique ou thermique du produit.

Parmi les copolymères les plus intéressants, on mentionnera les produits pour lesquels $R_2 = Cl$, $R_1 = R_3 = CH_3$ et R = H ; ces produits forment une sous-famille particulièrement importante car la préparation desdits copolymères nécessite seulement l'utilisation $[(CH_3)_3Cl\text{-}Si]_2$ NH et de $CH_3HSiCl_2$ et de $(CH_3)_2SiCl_2$ qui sont des produits commerciaux et des produits de base pour la synthèse des silicones.

C'est ainsi que l'on pourra utiliser comme silane un disilane chloré de formule $Cl_xSiMe_{3-x}\text{-}SiMe_{3-y}Cl_y$ dans laquelle $1 < x < 3$ et $1 < y < 3$. On pourra également utiliser les mélanges de disilanes chlorés tels qu'on les récupère dans la synthèse industrielle des chlorosilanes.

Une propriété des polysilanes-polysilazanes revendiqués dans la présente invention est la possibilité offerte par ces produits d'effectuer la transformation thermique des enchaînements

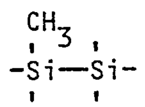

en enchaînements

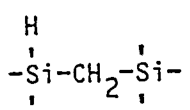

(cf., par exemple, S YAJIMA, Ceram. Bull. 1983, 62, 893 et ref. citées). Les polycarbosilazanes obtenus sont non seulement originaux, mais ils peuvent être obtenus solubles, fusibles sans dégradation sous atmosphère inerte, filables, réticulables et à taux de Si/C/N pouvant être très variables.

Ces nouveaux polycarbosilazanes sont obtenus par thermolyse des copolymères à des températures comprises entre 250 et 500° C sous atmosphère inerte ; ces polycarbosilazanes sont d'excellents précurseurs pour l'obtention de matrices et de fibres en carbonitrure de silicium, ce carbonitrure de silicium étant obtenu par chauffage des polycarbosilazanes à des température de 900-1000° C environ. Ces polycarbosilazanes, s'ils ont été élaborés selon l'invention sous atmosphère inerte sèche, ne contiennent pas (ou très peu) d'oxygène à condition d'utiliser, dans l'étape de formation du copolymère, un solvant non oxygéné.

Le procédé pour la préparation des copolymères selon l'invention consiste à mettre en présence, dans un milieu solvant, les comonomères en proportions choisies en présence d'un métal alcalin,plus particulièrement de sodium. Le solvant (ou mélange de solvants) utilisable peut être le toluène, le xylène, un alcane lourd, un mélange de toluène et de tétrahydrofuranne...

La température de copolymérisation est avantageusement la température d'ébullition du solvant, à pression atmosphérique.

Les exemples qui suivent illustrent l'invention :

Exemple 1

Dans cet exemple, ainsi que dans les suivants, le diméthyldichlorosilane à été préalablement distillé avant utilisation. De même, le toluène a été séché par distillation azéotropique, et le THF traité par le sodium en présence de benzophénone afin d'éliminer les traces d'eau et de peroxydes.

L'appareillage servant à effectuer la réaction est constitué d'un ballon de 500 ml muni d'une agitation magnétique, d'une ampoule à brome isobare, d'une entrée de gaz inerte (argon ou azote) et d'un réfrigérant ascendant à décaline, relié à une colonne desséchante ($CaCl_2$). On introduit tout d'abord le mélange des sovlants, constitué par 21,75 g de THF de 152,29 g de toluène, soit au total 200 ml dans la proportion de 1/7 en poids, puis 29 g de sodium (1,26 at.-g, 5 % en excès).

Le mélange solvant est chauffé au reflux, et le sodium granulé par une agitation énergique. Lorsque la dispersion de sodium fondu est suffisamment fine, on introduit goutte à goutte le mélange diméthyldichlorosilane (65,82 %, 0,51 mole) et $(HMeClSi)_2$ NH (15,67 g, 0,09 mole - 15 % molaire).

Il est à noter que, lors du mélange des deux chlorosilanes, il apparaît un trouble blanc en raison probablement d'une faible quantité de chlorure d'ammonium.

Dès les premières gouttes, le milieu se trouble et devient bleu pâle. En quelques minutes, une couleur bleu foncé est apparue. Durée de l'addition : 2 h. Au bout de 24 h de reflux on laisse refroidir sous atmosphère inerte, et l'on filtre sur fritté en boîte à gants sous atmosphère inerte. On obtient ainsi une solution limpide et incolore. Le solide bleu restant est repris au toluène puis filtré et cette opération est effectuée deux fois. Les deux filtrats ainsi obtenus sont rassemblés avec le premier et, l'ensemble concentré sous pression réduite, on obtient alors une graisse fluide de couleur gris-bleu, que l'on dévolatilise ensuite sous 1 mm de mercure, à 100°C pendant 90 min, à l'aide d'une colonne à distiller courte équipée d'un rectificateur.

Après refroidissement, le produit possède l'aspect d'une graisse opaque, figée, de couleur gris-bleu. Poids obtenu : 32,9 g (rdt : 84,6 %). Le copolymère est soluble dans des solvants tels que le benzène, le toluène, le cyclohexane, l'heptane, le tétrachlorure de carbone, l'éther, le tétrahydrofuranne etc.

Il est caractérisé par les méthodes physico-chimiques (IR, RMN) et par GPC. Par ailleurs, le solide bleu est méthanolysé, puis hydrolysé, ce qui conduit alors à un solide blanc pâteux. Après lavage aux solvants (acétone, éther), le solide est séché sous vide (1 mmHg) pendant une nuit à 140°C. On obtient alors 5,1 g de solide insoluble.

Exemple 2

L'expérience est conduite comme dans l'exemple 1, mais sans THF, avec 200 ml de toluène comme solvant. On obtient alors 0,53 g de produits légers, 28,1 g de copolymère soluble (rdt : 72,1 %) et 6,6 g de copolymère solide insoluble.

Exemple 3

L'expérience est conduite comme dans l'exemple 1, avec 175 ml d'un mélange toluène-THF comme solvant (dans les proportions respectives 7 pour 1 en poids), 23 g de sodium (1 at.-g.), 41,1 g de $Me_2SiCl_2$ (0,318 mole) et 18,5 g de $(HClMeSi)_2$ NH (0,106 mole, 25 % molaire). On obtient alors 1,45 g de produits légers, 25,45 g de copolymère soluble sous la forme d'une graisse qui devient fluide à 100°C (rdt : 86,4 %) et 1,4 g de copolymère solide insoluble.

Exemple 4

L'expérience est conduite comme dans l'exemple 2, avec 200 ml de toluène comme solvant, 25 g de sodium, 50,33 g de $Me_2$ $SiCl_2$ (0,39 mole) et 22,64 g de $(HMeClSi)_2$ NH fraîchement distillé (0,13 mole, 25 % molaire). On obtient alors 0,95 g de produits légers, 29,2 g de copolymère soluble (rdt : 81,1 %) et 2,15 g de solide insoluble.

Exemple 5

L'expérience est conduite comme dans l'exemple 2, avec 250 ml de toluène comme solvant, 28,73 g de sodium (1,25 at.-g), 50,33 g de $Me_2$ $SiCl_2$ (0,39 mole) et 36,6 g de $(HMeClSi)_2$ NH (0,21 mole, 35 % molaire). On obtient alors 1,05 g de produits légers, 40,52 g de copolymère soluble (rdt : 91,3 %) (huile visqueuse) et 0,95 g de copolymère insoluble.

Exemple 6

L'expérience est conduite comme dans l'exemple 2, avec 150 ml de toluène, 19,55 g de sodium (0,85 at.-g),

25,81 g de $Me_2SiCl_2$ (0,2 mole) et 34,83 g de $(HMeSiCl)_2$ NH (0,2 mole, 50 % molaire). On obtient alors 0,15 g de produits légers, 25,55 g de copolymère (huile fluide soluble) (rdt : 79,2 %) et 0,35 g d'insoluble.

Exemple 7

L'expérience est conduite comme dans l'exemple 2, avec 125 ml de toluène, 19,3 g de sodium (0,84 at.-g, excès de 5 %), 34,5 g de méthyldichlorosilane (0,3 mole) et 17,4 g de $(ClMeHSi)_2$ NH (0,1 mole, 25 % molaire).On obtient alors 0,32 g de produits légers, 21,8 g de copolymère soluble (huile) (rdt : 82,7 %) et 1,5 g de copolymère insoluble.

Exemple 8

L'expérience est conduite comme dans l'exemple 1, avec 300 ml du mélange toluène - THF dans les proportions respectives 7 pour 1 en poids, 32,2 g de sodium (1,4 at.-g), 79,94 g de dichlorométhylvinylsilane fraîchement distillé (0,566 mole) et 17,42 g de $(HMeClSi)_2$ NH (0,1 mole, 15 % molaire). On obtient alors 12,77 g de copolymère soluble (solide) (rdt : 23 %) et 41,4 g de copolymère insoluble solide (rdt : 77 %).

Exemple 9

L'expérience est conduite comme dans l'exemple 2, avec 250 ml de toluène, 23 g de sodium (1 at.-g), 50,78 g de dichlorométhylvinylsilane (0,36 mole) et 20,9 g de $(HMeClSi)_2$ NH (0,12 mole, 25 % molaire). On obtient alors 17,95 g de copolymère soluble solide (rdt : 43,4 %) et 23,4 g de copolymère insoluble (56,6 %).

Exemple 10

L'expérience est conduite comme dans l'exemple 2, avec 200 ml de toluène, 25,3 g de sodium (1,1 at.-g), 43,62 g de $Me_2$ $SiCl_2$ (0,338 mole, 65 % molaire), 7,33 g de dichlorométhylvinylsilane (0,052 mole, 10 % molaire), 22,64 g de $(HMeClSi)_2$ NH (0,13 mole, 25 % molaire). On obtient alors 0,4 g de produits légers, 27,05 g de copolymère soluble (rdt : 73,6 %) sous la forme de graisse fluide, et 8,8 g de copolymère solide insoluble.

Exemple 11

L'expérience est conduite comme dans l'exemple 1, avec 300 ml de toluène comme solvant, 21 g de sodium (0,91 at.-g), 61,7 g de disilanes chlorés de formule brute $Me_{2,3}Si_2Cl_{3,7}$ et 26,1 g de $(HMeClSi)_2$ NH (0,15 mole, 35 % molaire). On obtient alors 10,5 g de copolymère soluble (rdt : 25,78 %) et 23,3 g de copolymère insoluble (rdt : 69,71 %).

Exemple 12

L'expérience est conduite comme dans l'exemple 2, avec 125 ml de toluène, 16,1 g de sodium (0,7 at.-g), 36,5 g de $Me_2SiCl_2$ (0,28 mole) et 9,41 g de $(HMeClSi)_2$ NMe (0,05 mole, 15 % molaire). On obtient alors 2,14 g de produits légers, 17,5 g de copolymère soluble (rdt : 80,8 %) et 3,27 g de solide insoluble.

La microanalyse de la graisse soluble donne les résultats suivants : H(%) : 9,65 ; N(%) : 2,35 ; Cl(%) : $<$ 0,2.

Exemple 13

L'expérience est conduite comme dans l'exemple 2, avec 125 ml de toluène, 16,1 g de sodium (0,7 at.-g), 36,5 g de $Me_2SiCl_2$ (0,28 mole) et 10,1 g de $(EtHClSi)_2$ NH (0,05 mole, 15 % molaire). On obtient alors 1,07 g de produits légers, 16,98 g de graisse blanche soluble (rdt : 73,95 %) et 2,62 g de solide insoluble.

La microanalyse de la graisse soluble donne les résultats suivants : H(%) : 9,65 ; N(%) : 3,42 ; Cl(%) : 0,78.

Exemple 14

L'expérience est conduite comme dans l'exemple 2, avec 125 ml de toluène, 13,5 g de sodium (0,59 at.-g), 27,1 g de $Me_2SiCl_2$ (0,21 mole) et 20,9 g de $(HPhClSi)_2$ NH (0,07 mole, 25 % molaire). On obtient alors 0,47 g de produits légers, 25,12 g de copolymère soluble (rdt : 89,3 %) et 1,93 g d'insolubles.

La microanalyse de la graisse soluble donne les résultats suivants : H(%) : 6,95 ; N(%) : 4,33 ; Cl(%) : 1,59.

Exemple 15

L'expérience est conduite comme dans l'exemple 2, avec 150 ml de toluène, 14,94 g de sodium (0,65 at.-g), 48,74 g de $PhMeSiCl_2$ (0,255 mole) et 7,84 g de $(HMeClSi)_2$ NH (0,045 mole, 15 % molaire). On obtient alors 0,09 g de produits légers, 34,54 g de copolymère soluble (rdt : 99,3 %) et 0,15 g de solide insoluble.

Exemple 16

L'expérience est conduite comme dans l'exemple 2, avec 160 ml de toluène, 16,1 g de sodium (0,7 at.-g), 45,87 g de $PhMeSiCl_2$ (0,24 mole) et 13,93 g de $(HMeClSi)_2NH$ (0,08 mole, 25 % molaire). On obtient alors 0,23 g de produits légers,36,64g de copolymère soluble et 0,13 g d'insolubles.

Exemple 17

L'expérience est conduite comme dans l'exemple 2, avec 165 ml de toluène, 17,24 g de sodium (0,75 at.-g), 37,3 g de $Me_2SiCl_2$ (0,289 mole) et 10,11 g de $(HViClSi)_2NH$ (0,051 mole, 15 % molaire). On obtient alors 0,46 g de produits légers, 7,06 g de graisse soluble (rdt : 30,3 %) et 18,27 g d'insolubles.

On décrit dans les exemples suivants le traitement thermique (thermolyse) des copolymères selon l'invention.

Exemple 18

L'appareillage est constitué d'un ballon de silice de 500 ml à cols longs, muni d'une gaine thermométrique, d'une entrée de gaz inerte (argon) et d'un réfrigérant ascendant en silice à circulation d'eau, relié à un compteur à gaz de précision. Le copolymère soluble préparé selon l'exemple 1 est introduit dans le ballon sous atmosphère inerte (13,95 g), la pesée pouvant être effectuée en boîte à gants, puis l'appareillage est soigneusement purgé à l'argon.

La thermolyse est effectuée par chauffage progressif du ballon à l'aide d'un bain de sable fluidisé, jusqu'à une température de 500° C. L'opération est stoppée au bout de 5 h, la température du milieu réactionnel ayant alors atteint 433° C, et le dégagement total du gaz étant de 1725 $cm^3$.

Après déduction du volume mort de l'appareillage, le volume de gaz, rapporté à la masse du produit engagé, est de 104,6 $cm^3/g$. Le contenu du ballon est repris par 200 $cm^3$ d'hexane, après refroidissement, et agité pendant une heure avec un agitateur magnétique, jusqu'à dissolution optimale.

Après filtration en boîte à gants, on obtient un solide insoluble dont le poids est de 3,7 g après élimination du solvant sous vide. Le filtrat est concentré au rotavapor, puis dévolatilisé pendant 1 h à 250° C sous 1 mm de mercure. On recueille alors 0,82 g de produits légers, et 4,63 g de polycarbosilazane solide se ramollisant à 210° C au banc Koffler (rdt par rapport au copolymère engagé : 33,2 %). Taux de résidu à 900° C : 64 %.

La microanalyse du copolymère soluble donne les résultats suivants : N(%) : 3,2 ; Cl(%) : $<$ 0,25.

Exemple 19

L'expérience est conduite comme dans l'exemple 18, en utilisant le copolymère préparé dans l'exemple 1 (13,95 g). Durée : 5 h. Température du bain de sable : 500° C. Température finale du milieu réactionnel : 413° C. Volume de gaz (calculé comme précédemment) : 82,4 $cm^3/g$.

La microanalyse du copolymère soluble donne les résultats suivants : N(%) : 4,5 ; Cl(%) : $<$ 0,18.

Bilan :

- Produits légers : 1,76 g
- Polycarbosilazane soluble : 5,4 g (rdt : 38,7 %)

Température de ramollissement : 190° C.
Taux de résidu à 900° C : 66 %.

- Polycarbosilazane insoluble : 2,45 g.

Exemple 20

Expérience conduite comme décrit dans l'exemple 18, en utilisant 12,8 g de copolymère préparé selon l'exemple 2. Durée : 3 h 45 min. Température du bain de sable : 450° C. Température finale du milieu réactionnel : 402° C.

$$\frac{\text{Volume du gaz}}{\text{Masse du copolymère de départ}} = 81,2\ cm^3/g$$

Bilan :

- Produits légers : 2,1 g
- Polycarbosilazane soluble : 6,7 g (rdt : 52,3 %).

N(%) : 3,72 ; Cl(%) : 0,38.

Température de ramollissement sur banc Koffler : 250°C.
Taux de résidu : 66 % à 1400°C.
- Polycarbosilazane insoluble : 0,45 g.

Exemple 21

Expérience effectuée comme décrit à l'exemple 18, en utilisant au départ 12,8 g du copolymère préparé selon l'exemple 2. Durée : 4 h 30 min. Température du bain de sable : 425°C. Température finale du milieu réactionnel : 390°C.

$$\frac{\text{Volume du gaz}}{\text{Masse du copolymère de départ}} = 70,3 \ cm^3/g$$

Bilan :
- Produits légers, 1,5 g
- Polycarbosilazane soluble : 7,5 g (rdt : 58,6 %).
N(%) : 5,36 ; Cl(%) : 0,50
Température de ramollissement au banc Koffler : 170°C.
- Insoluble : 0,1 g.

Exemple 22

L'expérience a été effectuée comme décrit à l'exemple 18, avec 11,45 g de copolymère préparé selon l'exemple 3. Durée de la thermolyse : 50 min. Température du bain de sable : 325°C. Température finale du milieu réactionnel : 322°C.

$$\frac{\text{Volume du gaz}}{\text{Masse du copolymère de départ}} = 63,7 \ cm^3/g$$

Bilan :
- Produits légers : 1,4 g
- Polycarbosilazane soluble : 4,2 g (rdt : 36,7 %).
N(%) : 3,88 ; Cl(%) : 0,28
Température de ramollissement : 20°C.
- Insoluble : 4 g.

Exemple 23

Expérience conduite comme décrit à l'exemple 18, avec 11,9 g de copolymère préparé selon l'exemple 3. Durée de la thermolyse : 4 h. Température du bain de sable : 275°C. Température finale du milieu réactionnel : 273°C.

$$\frac{\text{Volume dégagé}}{\text{Masse du copolymère de départ}} = 48,3 \ cm^3/g$$

Bilan :
- Produits légers : 1,15 g.
- Polycarbosilazane soluble : 4,35 g (rdt : 36,5 %).
N(%) : 3,37 ; Cl(%) : < 0,01.
Température de ramollissement : 50°C.
- Insoluble : 4,9 g.

Exemple 24

Expérience conduite comme décrit dans l'exemple 18,avec 13,8 g de copolymère préparé selon l'exemple 4.

Durée de la thermolyse : 4 h 45 min. Température du bain de sable : 400°C. Température finale du milieu réactionnel : 376°C.

$$\frac{\text{Volume dégagé}}{\text{Masse du copolymère de départ}} = 69,9\ cm^3/g.$$

Bilan :
- Produits légers : 1,7 g
- Polycarbosilazane soluble : 7,9 g (rdt : 57,2 %)
Température de ramollissement : supérieure à 250°C.
- Insoluble : 0,1 g.

Exemple 25

Expérience conduite comme décrit dans l'exemple 18, avec 13,95 g de copolymère préparé selon l'exemple 4. Durée de la thermolyse : 3 h 10 min. Température du bain de sable : 400°C. Température finale du milieu réactionnel : 374°C.

$$\frac{\text{Volume dégagé}}{\text{Masse du copolymère de départ}} = 55,2\ cm^3/g$$

Bilan :
- Produits légers : 1,1 g
- Polycarbosilazane soluble : 9,3 g (rdt : 66,7 %).
N(%) : 4,62 ; Cl(%) : 0,7.
Température de ramollissement : 110°C.
- Insoluble : 0,5 g.

Exemple 26

Expérience conduite comme décrit dans l'exemple 18, avec 15 g de copolymère préparé selon l'exemple 5. Durée de la thermolyse : 4 h 30 min. Température du bain de sable : 400°C. Température finale du milieu réactionnel :

$$\frac{\text{Volume dégagé}}{\text{Masse du copolymère de départ}} = 57\ cm^3/g$$

Bilan :
- Produits légers : 0,6 g
- Polycarbosilazane soluble : 10,2 g (rdt : 68 %).
Température de ramollissement : 135°C.
- Insoluble : 0,1 g.

Exemple 27

Expérience conduite comme décrit dans l'exemple 18, avec 15 g de copolymère préparé selon l'exemple 5 au départ. Durée de la thermolyse : 3 h 25 min. Température du bain de sable : 400°C. Température finale du milieu réactionnel :

$$\frac{\text{Volume dégagé}}{\text{Masse du copolymère de départ}} = 65\ cm^3/g$$

Bilan :
- Produits légers : 0,55 g
- Polycarbosilazane soluble : 10 g (rdt : 66,7 %).
Température de ramollissement : supérieure à 250° C.
- Insoluble : 0,2 g.

La pyrolyse à 1200° C, sous argon, du polycarbosilazane soluble de cet exemple a donné un taux de résidu de 72 %. La céramique ainsi obtenue est totalement amorphe d'arpès le spectre RX. Après chauffage jusqu'à 1600° C, elle apparaît alors formée de microdomaines SiC et $Si_3N_4$, d'après la spectroscopie de photoélectron.

Exemple 28

Expérience conduite comme décrit dans l'exemple 18, avec au départ 11 g du copolymère préparé selon l'exemple 7. Durée de la thermolyse : 5 h. Température du bain de sable : 350° C. Température finale du milieu réactionnel : 328° C.

$$\frac{\text{Volume dégagé}}{\text{Masse du copolymère de départ}} = 36{,}3\ \text{cm}^3/\text{g}$$

Bilan :
- Produits légers : 3,2 g
- Polycarbosilazane soluble : 5,45 g (rdt : 49,5 %).
Point de ramollissement : 110° C.
- Insoluble : 0,5 g.

**Revendications**

1. Copolymères à liaisons -Si-N et -Si-Si- caractérisés en ce qu'ils sont obtenus par polycondensation,
- d'au moins un silane de formule $R\ R_1\ Si\ Cl_2$
- et d'au moins un disilazane de formule

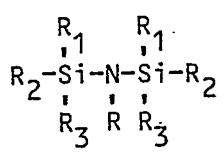

formules dans lesquelles
- $R_2$ est un atome d'halogène de préférence Br et Cl
- R, $R_1$ et $R_3$ identiques ou différents représentent un atome d'hydrogène, ou un radical hydrocarboné alkyle, alcényle, alcynyle, cycloalkyle, cycloalcényle, aryle, alkylaryle, alcénylaryle, éventuellement fonctionnel.

2. Copolymères selon la revendication 1 dans lesquels $R_2 = Cl$, $R = H$, $R_1 = R_3 = CH_3$.

3. Copolymères selon les revendications 1 et 2 dans lesquels le silane utilisé peut être un disilane chloré de formule
$Cl_xSiMe_{3-x}\text{-}SiMe_{3-y}Cl_y$
avec $1 < x < 3$
et $1 < y < 3$
ou le mélange de disilanes chlorés issus de la synthèse industrielle des chlorosilanes.

4. Procédé de préparation des copolymères selon l'une des revendications 1, 2 et 3, caractérisé en ce que la copolymérisation est effectuée en mettant en présence, dans un solvant, les monomères en présence d'un métal alcalin, de préférence le sodium.

5. Polycarbosilazanes, caractérisés en ce qu'ils sont obtenus par thermolyse, sous atmosphère inerte et sèche, entre 250 et 550° C d'un copolymère selon les revendications 1 et 2.

6. Carbonitrures de silicium,caractérisés en ce qu'ils sont obtenus par chauffage, sous atmosphère inerte, à une température de 900 à 1000° C d'un polycarbosilazane selon la revendication 5.

**Revendications pour l'Etat contractant suivant: ES**

1. Procédé pour la préparation de copolymères à liasons -Si-N- et -Si-Si- caractérisé en ce que on met en présence, dans un milieu solvant, au moins un silane de formule R $R_1$ Si $Cl_2$ et au moins un disilazane de formule

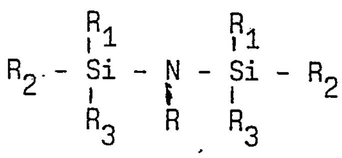

formules dans lesquelles
- $R_2$ est un atome d'halogène de préférence Br et Cl
- R, $R_1$ et $R_3$ identiques ou différents représentent un atome d'hydrogène, ou un radical hydrocarboné alkyle, alcényle, alcynyle, cyclo-alkyle, cycloalcényle, aryle, alkylaryle, alcénylaryle, éventuellement fonctionnel,

la réaction étant effectuée en présence d'un métal alcalin, de préférence le sodium.

2. Procédé selon la revendication 1 caractérisé en ce que l'on utilise des monomères dans lesquels $R_2$ = Cl, R = H, $R_1$ et $R_3$ = $CH_3$.

3. Procédé selon la revendication 1 caractérisé en ce que le disilane utilisé est un disilane chloré de formule

$Cl_xSiMe_{3-x}SiMe_{3-y}Cl_y$

avec $1 < x < 3$

et $1 < y < 3$

ou le mélange de disilanes chlorés issus de la synthèse industrielle des chlorosilanes.

4. Procédé selon l'une des revendications 1 à 3 caractérisé en ce que le solvant utilisé est choisi parmi les hydrocarbures aromatiques, le cyclohexane, l'heptane, le tétrahydrofurane et les mélanges de ces produits.

5. Utilisation des produits obtenus par mise en oeuvre du procédé de la revendication 1 caractérisée en ce que lesdits produits sont soumis à une thermolyse, sous atmosphère inerte et sèche, entre 250 et 550° C de façon à obtenir un polycarbosilazane.

6. Utilisation des produits obtenus par mise en oeuvre de la revendication 5, caractérisée en ce que lesdits polycarbosilazanes sont chauffés, sous atmosphère inerte, à une température de 900 à 1000° C de façon à obtenir un carbonitrure de silicium.